# EUROPÄISCHE PATENTANMELDUNG

(11) **EP 2 266 751 A1**
(43) Veröffentlichungstag der Anmeldung: **29.12.2010**
(21) Anmeldenummer: 10151606.0
(22) Anmeldetag: 14.10.2004
(51) Int. Cl.: B23Q 11/10, B23D 77/00, B23B 51/06

(54) **Schaftwerkzeug und zugeordnete Kühl-/Schmiermitteleinspeisestelle**

(30) Priorität: 14.10.2003 DE 10347755
(62) Teilanmeldung aus: 04790432.1
(71) Anmelder: Gühring, Jörg, 72458 Albstadt (DE)
(72) Erfinder: Hänle, Peter, Wales, WI 53183 (US); Gsänger, Dieter, 72511 Bingen (DE)
(74) Vertreter: Winter, Brandl, Fürniss, Hübner, Röss, Kaiser, Polte - Partnerschaft

(57) **Zusammenfassung**

Beschrieben wird ein Schaftwerkzeug, das in besonderer Weise für die Ankopplung an eine Schnittstelle zu einer Einspeisestelle von Kühl-/Schmiermittel, insbesondere der Art, wie sie bei der Minimalmengenschmierung (MMS) verwendet wird, geeignet ist. Das Schaftwerkzeug ist mit zumindest einem in der Regel exzentrisch und innenliegenden Kühlkanal ausgestattet, der auf der einem Bearbeitungsabschnitt abgewandten Seite eine Mündungsöffnung hat. Diese ist von einer konischen Passungsfläche eingefasst, über die der Schaft - beispielsweise innerhalb eines Spannfutters - an ein koaxial liegendes MMS(Minimalmengenschmierung)-Versorgungsteil angeschlossen werden kann.

## Beschreibung

Die Erfindung betrifft allgemein eine Schnittstelle zwischen einem Schaftwerkzeug und einem in einem Spannfutter anzuordnenden Anschlussstück zur Ausbildung einer Einspeisestelle von Kühl-/Schmiermittel, und im Besonderen die Gestaltung eines Schaftwerkzeugs, wie z.B. eines Bohr-, Fräs-, Reib- oder Gewindeform- oderschneidwerkzeugs, welches mit einem innenliegenden Kühlkanal ausgestattet ist und sich dadurch auszeichnet, dass es bei wirtschaftlicher Herstellbarkeit in besonders effektiver Weise für die Versorgung der Schneiden mit Kühl-/Schmiermittel geeignet ist.

Schaftwerkzeuge dieser Art werden in der Regel über eine Einspeisestelle für Kühl-/Schmiermittel, beispielsweise in Form eines einen zentralen Kühl-/Schmiermittel-Versorgungskanal aufweisenden Anschlussstücks mit Kühl-/Schmiermittel versorgt. Häufig erfolgt dabei innerhalb eines Spannfutters ein Anschluss an ein MMS(Minimalmengenschmierung)-Versorgungsteil. Die Kopplungsstelle zwischen Schaftwerkzeug und Anschlussstück soll im Folgenden als Schnittstelle bezeichnet werden.

Die MMS-Technologie, d.h. die sogenannte Minder- bzw. Minimalmengenschmierung gewinnt insbesondere in der spannenden Bearbeitungstechnik zunehmend an Bedeutung. Dabei geht es darum, einen Schmierstoffnebel (eine Art Aerosol) mit einem minimalen Anteil an Schmierstoff und einem erheblichen Luftüberschuss in möglichst gleichmäßiger Konsistenz und Qualität an die im Eingriff befindlichen Schneiden zu bringen. Schwankungen in der Qualität, die z.B. dadurch hervorgerufen werden, dass in dem unter Druck zugeführten Aerosol zyklische oder spontane Entmischungen auftreten, können zu unvorhersehbarem Werkzeugbruch und in der Folge aufgrund Produktionsunterbrechung zu erheblichen Schäden führen.

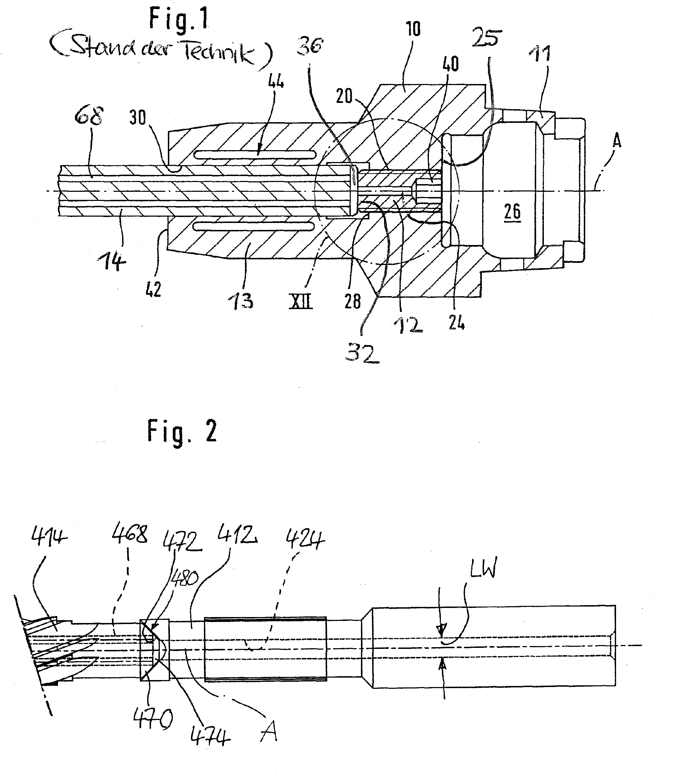

Eine bekannte Anordnung für eine solche Schnittstelle ist beispielsweise in der Fig. 1 gezeigt, auf die bereits jetzt Bezug genommen wird.

In dieser Figur bezeichnet das Bezugszeichen 10 eine Werkzeugaufnahme, die an einem Ende einen Hohlschaftkegel 11 zur Aufnahme in ein Werkzeugsystemmodul bzw. in eine Werkzeugmaschinenspindel und auf der anderen Seite ein zylindrisches Spannteil 13 zur eigentlichen Aufnahme eines Werkzeugs 14 hat, das im gezeigten Beispiel von einem innengekühlten Bohrwerkzeug gebildet ist. Es sei jedoch bereits hier hervorgehoben, dass das Werkzeug auch ein anderes drehend angetriebenes Werkzeug, wie zum Beispiel ein Fräswerkzeug oder Feinbohrwerkzeug darstellen kann. Um die mit 68 bezeichneten innenliegenden Kanäle mit Kühl- und Schmiermittel zu versorgen ist in der Werkzeugaufnahme 10 eine Gewindebohrung 20 ausgebildet, in die ein Einsatzstück 12 in Form einer Stellschraube eingedreht ist. Das Gewinde 20 erstreckt sich konzentrisch zur Achse A von einer Bodenfläche 25 der Ausnehmung 26 des Hohlschaftkegels 11 bis zur Grundfläche 28 der zylindrischen Bohrung 30 zur Aufnahme des Werkzeugs 14.

Mit der dem Werkzeug zugewandten Stirnseite liegt das Einsatzstück 12 an einer der nicht gezeigten Werkzeugspitze abgewandten Stirnseite 32 des Werkzeugs 14 an. Durch die gesamte Länge des Einsatzstücks 12 erstreckt sich eine zentrale Bohrung 24, die im Durchmesser etwa so groß gehalten ist, wie die Breite eines diametral verlaufenden Schlitzes 36 in der daran anschlagenden Stirnfläche 32 des Werkzeugs 14. Der diametrale Schlitz 36 ist so geführt, dass er die Mündungsöffnungen der beiden innenliegenden Kanäle 68 überstreicht.

Zur axialen Einstellung des Einsatzstücks 12 ist auf der dem Werkzeug 14 abgewandten Seite eine Innensechskantausnehmung 40 vorgesehen. Dadurch ist sichergestellt, dass durch Verstellung der Stellschraube 12 der Anschlag für die Stirnseite 32 des Werkzeugs 14 mit verstellt wird, so dass die axiale Position der (nicht gezeigten) Werkzeugschneide zu einer Stirnseite 42 der Werkzeugaufnahme 10 feinjustierbar ist.

Zur Spannung des Werkzeugs wird z.B. zunächst die Einstellschraube 12 auf ein vorbestimmtes Sollmaß in die Gewindebohrung 20 eingeschraubt. Anschließend wird das Werkzeug 14 bis auf Anschlag mit der Stellschraube 12 in die zylindrische Bohrung 30 eingesetzt und daraufhin die Spannvorrichtung, im gezeigten Beispiel in Form eines Dehnspannfutters 44 betätigt. Es ist ersichtlich, dass bei Einspeisung von Kühl-/Schmiermittel über den den Hohlschaftkegel aufnehmenden Moduls eines Spannsystems eine gleichmäßige Versorgung der Kühlkanäle 68 dadurch erfolgt, dass das Kühl-/Schmiermittel über die Innensechskantausnehmung 40 eintritt, von dort über die Bohrung 24 zum damit fluchtenden Schlitz 36 strömt und von dort radial nach außen den Weg zu den Mündungsöffnungen der innenliegenden Kanäle 68 nimmt.

Es hat sich herausgestellt, dass diese Konstruktion insbesondere dann, wenn das Werkzeug mit sogenannter "Mindermengenschmierung" betrieben wird, nicht zuverlässig dafür sorgen kann, dass der gewünschte Kühl-/bzw. Schmiereffekt in zufriedenstellender Weise auftritt. Es hat sich im Einzelnen gezeigt, dass der bei der Mindermengenschmierung durch die innenliegenden Kanäle zu transportierende Schmierstoffnebel nicht in der gewünschten gleichmäßigen Konsistenz an der Schneide ankommt.

Um diese Probleme besser in den Griff zu bekommen, sind verschiedene Anstrengungen unternommen worden. So wird beispielsweise in der Patentveröffentlichung DE 101 57 450 A1 ein Konzept vorgeschlagen, mit dem die Stabilisierung des Gemischs dadurch erfolgt, dass mehrfache großwinkelige Umlenkungen der Ströme bzw. Teilströme vermieden werden, wodurch einer unkontrollierten Entmischung des Schmiemebels wirksam entgegen getreten wird.

Diese bekannte Lösung erfordert allerdings eine verhältnismäßig komplexe Geometrie der im Eingriff befindlichen Anschlussflächen zwischen Werkzeugschaft und Einspeisungsteil, wodurch die Werkzeugkosten ansteigen, zumal die Werkzeuge häufig aus besonders hochfesten und schwerer zu bearbeitenden Werkstoffen bestehen.

Der Erfindung liegt deshalb die Aufgabe zugrunde, eine Schnittstelle der eingangs beschriebenen Art zu schaffen, die einfacher herzustellen ist und dennoch effektiv zur Kühl-/Schmiermitteleinspeisung in ein Werkzeug dienen kann. Eine weitere Aufgabe ist die Ausgestaltung der Schnittstelle derart, dass mit einer wirtschaftlich herstellbaren Konfiguration sichergestellt wird, dass das Kühl-/Schmiermittel möglichst frei von Druckverlusten durch ein Einsatzstück und in den zumindest einen betreffenden innenliegenden Kanal im Werkzeug eingespeist und somit in homogener Qualität an die Schneide geleitet wird.

Diese Aufgabe wird durch die Merkmale des Anspruchs 1 gelöst.

Erfindungsgemäß wird das der Schneide abgewandte Schaftende neu gestaltet. Während man bislang dieses Schaftende mit einer zur Achse senkrecht verlaufenden Plan-Stirnfläche ausgestattet hat, wird es erfindungsgemäß mit einer konischen Passungsfläche versehen, welche die zumindest eine Mündungsöffnung des innenliegenden Kühlkanals einfasst. Hierdurch ergibt sich die Möglichkeit, die Kontakt- und Dichtfläche zu einer angrenzenden Komponente, wie z.B. zu einem Schmiermittel-Einspeisungsstück wirksam zu vergrößern, ohne den Herstellungsprozess des Werkzeugs spürbar zu verteuern. Denn moderne Werkzeugmaschinen sind ohne weiteres in der Lage, die konische Passungsfläche in einem Arbeitsgang und damit ebenso schnell und wirtschaftlich herzustellen wie eine Anfassung, die bei der herkömmlichen Ausbildung von Plan-Stirnflächen ohnehin angebracht werden mussten, insbesondere dann, wenn das Werkzeug aus einem Hartstoff, wie z.B. Hartmetall oder einem Keramik- oder Cermet-Werkstoff hergestellt wird. Es hat sich gezeigt, dass es allein durch geeignete Toleranz-Vorgaben auf Seiten des Werkzeugs und des Anschlussstücks gelingt, die Einspeisung von Kühl-/Schmiermittel prozesssicher zu gestalten.

Die konische Passungsfläche hat aber darüber hinaus den großen zusätzlichen Vorteil, dass sich ein wesentlich breiteres Spektrum für die Gestaltung der Kühl-/Schmiermittel-Übergabe zum Werkzeug ergeben. Denn die Konusfläche kann insbesondere dann, wenn das Werkzeug mit zumindest einem exzentrisch liegenden innenliegenden Kühlkanal ausgestattet ist, zur axialen und radialen Führung des Schmiermittels an die Mündungsstelle des Kühlkanals herangezogen werden, was insbesondere dann vorteilhaft ist, wenn es darauf ankommt, bei MMS-Systemen das Öl-/Luftgemisch homogen und ohne unerwünschte Entmischungen zur Werkzeugspitze bzw. zur Schneide zu leiten.

Es soll an dieser Stelle hervorgehoben werden, dass die Gestaltung des Werkzeugs im Bereich des Schaftendes einerseits und die Gestaltung des zugehörigen Anschlussstücks andererseits für sich jeweils eine Erfindung darstellt, für die gesonderter Schutz beansprucht wird.

Je nach konkreter geometrischer Gestaltung des für die Einspeisung von Kühl-/Schmiermittel dienenden Anschlussstücks kann die konische Form des Schaftendes weiteren Bearbeitungsschritten unterworfen werden, um dadurch die Strömungsführung zu verbessern bzw. zu vergleichsmäßigen.

Wenn der zumindest eine innenliegende Kühlkanal zur Schaftachse versetzt ist, kann es vorteilhaft sein, das Werkzeug gemäß Anspruch 3 auszubilden. Der radial verlaufende Schlitz, welcher für den Fall, dass eine gerade Zahl von diametral zueinander versetzten innenliegenden Kühl-/Schmiermittelkanälen vorgesehen ist, noch einfacher gefertigt werden kann, nämlich als durchgehender im Wesentlichen diametral verlaufender Schlitz, ist sehr einfach zu fertigen. Das Anschlussstück für die Schmiermitteleinspeisung kann dann als einfacher Innenkonus gestaltet sein.

Durch entsprechende Toleranzvorgabe zwischen Außenkonus des Schaftes und Innenkonus des Anschlussstücks lässt sich eine zuverlässige umlaufend geschlossene Dichtfläche im Bereich des größten Durchmessers der Konus-Flächenpaarung erzielen. Es hat sich darüber hinaus gezeigt, dass sich mit dieser Gestaltung der Kühl-/Schmiermittel-Übergabe sehr gute Strömungsverhältnisse realisieren lassen.

Die Kühl-/Schmiermittel-Übergabestelle ist aufgrund der Konus-Kontaktflächen leicht abdichtbar, so dass ein unerwünschtes Austreten von Kühl-/Schmiermittel beispielsweise in einen Spannbereich eines Werkzeugfutters oder in einen HSK-Innenraum vermieden wird. Gleichzeitig ist die Handhabung des Anschlusses zwischen Werkzeug und Kühl-/Schmiermittel-Übergabeteil äußerst einfach, wobei sich aufgrund von umfangreichen strömungstechnischen Versuchen ergeben hat, dass die relative einfache geometrische Gestaltung derart ist, dass es im Bereich der Schnittstelle nicht zu unkontrollierten Schmiermedien-Ansammlungen kommt. Somit gelangt die gewünschte Schmiermenge auch tatsächlich in der erforderlichen Qualität zu den Schneiden, wobei eine besonders wirtschaftliche Herstellung des Werkzeugs und der anderen Komponenten der Schmiermittel-Einspeisungs-Schnittstelle sichergestellt, ist.

Besonders vorteilhaft ist die Erfindung dann anzuwenden, wenn das Werkzeug mit mehreren exzentrisch und innenliegenden Kühlkanälen ausgestattet ist, die entweder gerade oder gewendet verlaufen können.

Der Schlitz bzw. die schlitzartige Ausnehmung kann im Schaftwerkzeug und/oder im Anschlussstück ausgebildet sein.

Eine besonders geringe Wirbelbildung im Bereich der Kühl-/Schmiermittel-Übergabe ergibt sich dann, wenn der Schlitz einen gerundeten Nutgrund hat. Versuche haben ferner gezeigt, dass ein breiter Schlitz tendenziell zu noch geringerer Wirbelbildung führt, so dass diese Weiterbildung im Besonderen für MMS-Werkzeuge geeignet ist.

Durch die erfindungsgemäß vereinfachte Gestaltung der einem Schmiermittel-, vorzugsweise einem MMS-Versorgungsteil gegenüberliegenden Stirnseite des Werkzeugs bietet sich auch der Einsatz besonders hochfester Werkstoffe für den Schneidkopf bzw. das Werkzeug an. Im Einzelnen lassen sich bei dem erfindungsgemäßen Werkzeug besonders wirtschaftlich Hartstoffe, insbesondere Sinterwerkstoffe einsetzen, einschließlich der sogenannten Cermet-Werkstoffe. Denn die erfindungsgemäß in das Werkzeug einzubringenden Ausnehmungen für das Kühl-/Schmiermittel können bereits im Sinterrohling ausgebildet werden, ohne dass es einer Nachbearbeitung, insbesondere einer Innen-Nachbearbeitung des Fertigteils bedarf, weil diesbezüglich hohe Maßanforderungen an Form- und/oder Lagetoleranzen nicht erfüllt werden müssen.

Der Schneidkopf bzw. das Werkzeug kann zur Verbesserung der Schnittfunktion und zur Verbesserung der Standzeit zumindest bereichsweise mit einer Beschichtung versehen sein, die vorzugsweise als Hartstoffschicht ausgeführt ist. Hierbei kann es sich beispielsweise um eine Schicht aus Diamant, vorzugsweise nanokristallinem Diamant, aus Titan-Nitrid oder aus Titan-Aluminium-Nitrid handeln.

Selbständiger Gegenstand der Erfindung ist darüber hinaus ein Sinterrohling für das erfindungsgemäße Werkzeug, wobei der Sinterrohling ein Schaftende in Konusform hat, so dass die Endbearbeitung des Schaftes bzw. der konischen Passungsfläche auf Sollmaß auf ein Minimum beschränkt werden kann. Diese von Sinterrohlingen gebildeten Schaftteile können vom Hersteller als Halbzeuge bezogen werden. Vorteilhafter Weise werden diese Formköpfe mit Aufmaßen in der Größenordnung von lediglich 0.5 mm bezogen auf den Nenndurchmesser des Werkzeugs versehen.

Weitere vorteilhafte Ausgestaltungen der Erfindung sind Gegenstand der übrigen Unteransprüche.

Nachstehend werden anhand schematischer Zeichnungen Ausführungsbeispiele der Erfindung näher erläutert. Es zeigen:
Fig. 2 eine schematische Seitenansicht eines beispielsweise drehangetriebenen Schaftwerkzeugs, insbesondere eines Bohrungsnachbearbeitungswerkzeugs in der Ausgestaltung als Hochleistungs-Reibahle, wobei die Einspeisung von Kühl-/Schmiermittel in innenliegende Kühlkanäle über eine Einspeisungs-Schnittstelle erfolgt, die mit einer konischen Passungsfläche des Werkzeugschafts zusammenwirkt;
Fig. 3 eine vergrößerte Teilansicht der Kühl-/Schmiermittel-Übergabeschnittstelle der Ausführungsform der Figur 2;
Fig. 4 die Ansicht "IV" in Figur 3;
Fig. 5 die Ansicht "V" in Figur 4; und
Fig. 6 eine modifizierte Ausführungsform einer Kühl-/Schmiermittel-Übergabeschnittstelle.

Die in Figur 2 gezeigte Ausführungsform der Erfindung zeigt die erfindungsgemäße Gestaltung eines Schaftwerkzeugs, welches in vorteilhafter Weise mit einer besonders gestalteten MMS-Einspeisungs-Schnittstelle verwendet werden kann, die anhand einer Verbindung zwischen einem ersten Werkzeugschaftteil 412 und einem zweiten Schaftteil 414 dargestellt ist, der das Schneidteil ausbildet bzw. trägt.

Es erfolgt eine Einspeisung von Kühl-/Schmiermittel aus einem im ersten Schaftteil 412 ausgebildeten zentralen Kanal 424 in exzentrisch angeordnete, innenliegende Kühlmittelkanäle 468 des zweiten Schaftteils 414. Es sind zwei sich geradlinig in axialer Richtung erstreckende Kühlkanäle vorgesehen, die diametral zueinander versetzt auf einem gemeinsamen Teilkreis liegen. Es soll jedoch schon an dieser Stelle hervor gehoben werden, dass die nachstehend näher zu beschreibende Kühl-/Schmiermittel-Einspeisung nicht auf eine bestimmte Art und Ausbildung der innenliegenden Kühlkanäle beschränkt ist, die z.B. auch wendelförmig - beispielsweise in den Stegen eines Wendelbohrers - verlaufen können, wobei sie auch über den Umfang ungleichmäßig verteilt sein und/oder auf unterschiedlichen Teilkreisen liegen können. Der Ort des Austritts der innenliegenden Kühlkanäle kann den individuellen Anforderungen entsprechend gewählt und soll deshalb hier nicht im einzelnen beschrieben werden. Aus diesem Grund ist die Ansicht des Schneidkopfs 414 schematisch abgeschnitten.

Die Anbindung des das Schneidteil 414 tragenden Schaftteils an das erste Schaftteil 412 erfolgt über eine Konusflächenpaarung 480, wobei eine auf Fügepassung bearbeitete, beispielsweise geschliffene Kegelmantelfläche bzw. ein Kegelstumpf 470 des Schaftteils formschlüssig, d.h. passungsgenau in einem Innenkonus 472 des ersten Schaftteils 412 aufgenommen ist. In dessen Grund mündet der zentrale Kühl-/Schmiermittelkanal 424.

Mit anderen Worten, das zweite, die Schneiden tragende Schaftteil 414 hat auf der den Schneiden abgewandten Seite eine die Mündungsöffnungen der innenliegenden Kühlkanäle einfassende bzw. umgebende konische Passungsfläche 470, 480. Bei der gezeigten Ausführungsform erfolgt die Einspeisung des Kühl-/Schmiermittels in die innenliegenden Kanäle 468 erfolgt des weiteren über einen strinseitigen, die beiden Mündungsöffnungen erfassenden Schlitz 474.

Der Schlitz 474 hat beispielsweise einen gerundeten Schlitzgrund und vorteilhafter Weise eine Breite, die an die lichte Weite LW des vom Anschlussstück, d.h. vom ersten Schaftteil 412 kommenden Kühl-/Schmiermittel-Versorgungskanals 424 angepasst ist.

Der Schlitz kann beispielsweise im Wesentlichen Halbkreisquerschnitt haben. Damit bei Bedarf eine Abdichtung des Kühl-/Schmiermittels nach außen erfolgen kann, ist die Höhe des Kegelstumpfes 470 größer ist als die Tiefe des Schlitzes 474 im Bereich seines radialen Austritts aus dem Schneidteil 414, so dass radial außerhalb des Schlitzes eine formschlüssige Konusflächenpaarung zwischen dem Kegelstumpf 470 des Schneidteils und dem Innenkonus des Anschlussstücks 412 verbleibt. Die Tiefe des Schlitzes kann auch in radialer Richtung zunehmen.

Die in Figur 2 gezeigte Einspeisung des Kühl-/Schmiermittels in die innenliegenden Kühlkanäle 468 ist grundsätzlich immer dann mit besonderen Vorteilen anzuwenden, wenn es darum geht, Kühl-/Schmiermittel, insbesondere mit geringem Schmiermengenanteil, wie es bei der MMS-Technik verwendet wird, von einem Anschlussstück mit zentralem Versorgungskanal in zumindest einen außermittig liegenden Kühlkanal im Werkzeug verlustfrei und mit guter Prozesssicherheit einzubringen. Die Erfindung soll dehalb auch einen Gegenstand erfassen, der allein auf diese Schnittstelle für die Kühl-/Schmiermittel-Übergabe gerichtet ist, sowie auf die jeweilige besondere Gestaltung der daran beteiligten Komponenten.

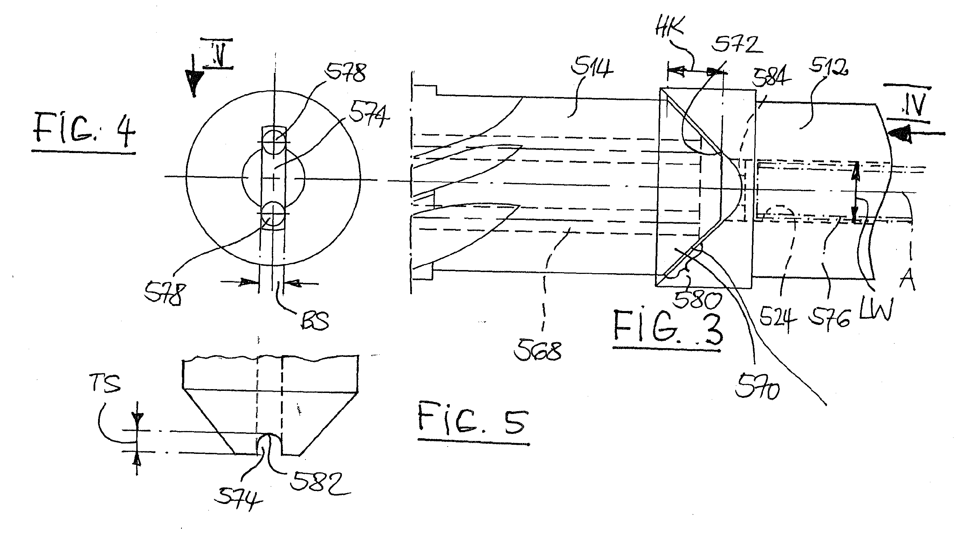

Zur Verdeutlichung der besonderen Aspekte dieser Erfindung wird auf die Figuren 3 bis 5 Bezug genommen, die eine derartige Schnittstelle der Kühl-/Schmiermittel-Übergabe zwischen einem Werkzeugschaft 514 und einem Anschlussstück 512 zeigt, das beispielsweise von einem sogenannten und unter Bezug auf die Figur 1 bereits beschriebenen MMS-Verstellteil, beispielsweise einer Verstellschraube gebildet sein kann, die in ihrem Inneren ein mit strichpunktierter Linie angedeutetes MMS-Röhrchen 576 aufnimmt.

Das Schaftwerkzeug 514 ist mit zumindest einem in der Regel exzentrisch und innenliegenden Kühlkanal 568 ausgestattet und soll beispielsweise in einem nicht näher dargestellten Spannfutter, wie z.B. einem Hydro-Dehnspannfutter oder einem Schrumpffutter eingespennt werden. Jeder innenliegende Kühl-/Schmiermittelkanal 568 hat auf der dem Anschlussstück 512 zugewandten Seite jeweils eine Mündungsöffnung 578, die wiederum von einer konischen Passungsfläche 570 eingefasst ist. Das heißt, das Schaftende des Werkzeugs ist konisch ausgebildet, wobei der Konus zumindest im Bereich radial außerhalb desr Mündungsöffnung 578 eine genau bestimmte Formgebung hat, die eine Passungsfläche für das Zusammenwirken mit dem Anschlussstück bildet. Die Passungsfläche ist vorzugsweise von einer feinberabeiteten Fläche gebildet. Sie kann sich auch in einen Bereich radial innerhalb der Mündungsöffnung 578 fortsetzen.

Darüber hinaus liegen die Mündungsöffnungen bei dieser Ausführungsform im Bereich eines zugeordfneten stirnseitigen, im Wesentlichen radial gerichteten Schlitzes 574.

Da die Mündungsöffnungen 578 der gezeigten Ausführungsform diametral zueinander versetzt sind, genügt hier ein einziger diametraler Schlitz. Das Anschlussstück 512 hat wieder einen zentrischen Kühl-/Schmiermittel-Versorgungskanal 524, der im Scheitelbereich eines Innenkonus 572 austritt. Der Innenkonus 572 nimmt formschlüssig und mit Fügepassung das zugewandte Ende, d.h. den Kegelstumpf 570 des Werkzeugschafts 514 auf. In Figur 13 ist aus zeichentechnischen Gründen der Passungsspalt übertrieben groß dargestellt. Tatsächlich liegen die Passungsflächen eng und damit derart aneinander an, dass eine radiale Abdichtung erfolgt. Die sich gegenüberliegenden Konusflächen sind vorzugsweise so toleriert, dass der Kegelwinkel des Außenkonus, d.h. des Kegelstumpfes 570 jedenfalls nicht größer ist als der Kegelwinkel des Innenkonus 572, so dass bei axial fest aneinanderliegenden Konusflächen eine Berührung im radial außenliegenden Bereich gewährleistet ist.

Das Anschlussstück 512 ist vorzugsweise axial verstellbar im Spannfutter aufgenommenen.

Damit die Übergabe des Kühl-/Schmiermittels vom Anschlusstück in die innenliegenden Kühlkanäle prozesssicher, d.h. frei von Undichtigkeiten und Schwankungen in der Qualität des Schmiermittels an der Werkzeugschneide erfolgen kann, ist die Schnittstelle wie folgt ausgebildet:

Zunächst hat der Schlitz 574 einen gerundeten Schlitzgrund 582. Vorzugsweise hat er darüber hinaus eine Breite, die im Wesentlichen der lichten Weite LW des vom Anschlussstück 512 kommenden Kühl-/Schmiermittel-Versorgungskanals 524 entspricht oder kleiner als diese ist. Versuche haben gezeigt, dass besonders geringe Wirbelbildung dann realisiert werden kann, wenn der Schlitz im Wesentlichen Halbkreisquerschnitt hat.

Weil das im Innenkonus 572 des Anschlussstücks 512 aufgenommene Schaftende 570 die Form eine Kegelstumpfes hat und weil die Höhe HK des Kegelstumpfes 570 größer ist als die Tiefe TS des Schlitzes 574 im Bereich seines radialen Austritts aus dem Werkzeugschaft 514, verbleibt radial außerhalb des Schlitzes eine formschlüssige Konusflächenpaarung 580 zwischen dem Kegelstumpf 570 des Werkzeugs 514 und dem Innenkonus 572 des Anschlussstücks 512, über die eine zuverlässige radiale Abdichtung des mit Kühl-/Schmiermittel beaufschlagten Innenraums erfolgt. Dabei ist die Formgebung des Werkzeugschaftendes sehr wirtschaftlich herzustellen.

Über die Form des Schlitzes 574 kann eine Optimierung der Versorgungsströmung erfolgen. Besonders gute Ergebnisse haben sich mit einem gerundeten, aber relativ breiten Schlitz ergeben, der eine konstante Tiefe aufweisen kann.

Alternativ kann die Tiefe TS des Schlitzes bzw. des von der schlitzartigen Ausnehmung begrenzten Kanals auch in radialer Richtung zunehmen.

Als Anschlussstück können unterschiedlichste Komponenten dienen. Es ist bei Ausbildung der Kühl-/Schmiermittel-Übergabe- Schnittstelle in einem Spannfutter von einem axial einstellbaren Adapter, beispielsweise in der Ausführung als Schraube gebildet, die im Wesentlichen die Form eines gestuften Zylinders hat, wobei der Abschnitt größeren Durchmessers den Innenkonus 572 ausbildet. Der Adapter 512 kann auf der dem Werkzeug zugewandten Seite eine zentrische Mehrkantausnehmung 584 mit geringer axialer Erstreckung haben.

Das Werkzeug besteht zur Sicherstellung eines Höchstmaßes an Stabilität entweder zur Gänze, vorzugsweise zumindest im Bereich des Schneidkopfs aus einem hochfesten Werkstoff, wie z.B. aus Hartmetall, Schnellstahl wie HSS, HSSE oder, HSSEBM, Keramik, Cermet oder aus einem anderen Sinterwerkstoff. Besonders bevorzugt wird der Sinterwerkstoff Cermet, und hier insbesondere ein Cermet-Werkstoff mit feinkörnigem Gefüge, hoher Warmhärte und hoher Zähigkeit.

Zur zusätzlichen Verbesserung der Bearbeitungsqualität kann der Schneidkopf zumindest im Bereich der am höchsten beanspruchten Abschnitte, d.h. im Bereich der Schneidkanten und Rundschlifffasen mit einer Beschichtung versehen sein, die vorzugsweise als Hartstoffschicht ausgebildet ist. Für diese Hartstoffschicht kommt z.B. Diamant, vorzugsweise nanokristalliner Diamant in Frage, Titan-Nitrid- oder Titan-Aluminium-Nitrid. Besonders geeignet sind u.a. eine Titan-Aluminium-Nitrid-Schicht und eine sogenannte Mehrlagen-Schicht, die unter der Bezeichnung "Fire I" von der Firma Gühring oHG vermarktet wird. Dabei handelt es sich um eine TiN-/(Ti,Al)N-Mehrlagen-Schicht.

Besonders bevorzugt kann auch eine Verschleißschutzschicht zur Anwendung kommen, die im wesentlichen aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht. Dabei kann der Schichtaufbau eilagig sein mit einer homogenen Mischphase oder er kann aus mehreren in sich homogenen Lagen bestehen, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

Der die Schneiden tragende Teil 414 des gezeigten Ausführungsbeispiels kann auch aus einem Hartstoff, insbesondere einem Sinterwerkstoff, wie z. B. einem Hartmetall oder einem Cermet-Werkstoff bestehen. Bei dem Einsatz von Reibahlen sind insbesondere die Kriterien Abriebverschleiß und Warmhärte von entscheidender Bedeutung. Es hat sich herausgestellt, dass die Cermet Sorte "HTX", das von der Firma Kennametal-Hertel vermarktet wird, besonders vorteilhaft eingesetzt werden kann. Gute Ergebnisse erzielt man darüber hinaus mit den Sorten "SC30" der Herstellerfirma Cerasiv GmbH (Feldmühle) und "Tungaly NS530" der Firma Toshiba Europa GmbH.

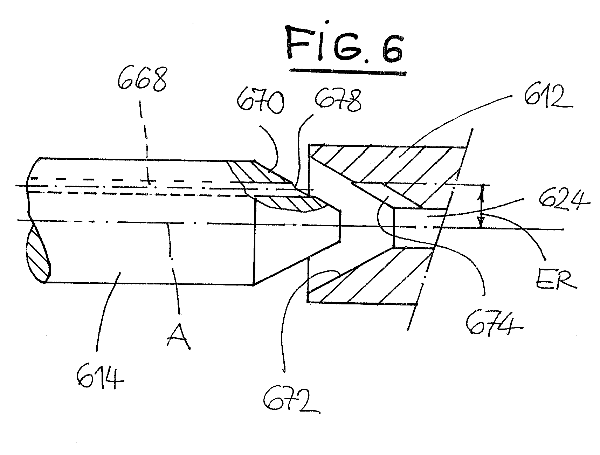

Unter Bezug auf die Figur 6 wird eine weitere Variante des Schaftwerkzeugs und der Schnittstelle zur Kühl-/Schmiermittel-Einspeisung beschrieben. Dabei werden wiederum für diejenigen Komponenten, die den Bestandteilen der zuvor beschriebenen Ausführungsformen entsprechen, ähnliche Bezugszeichen verwendet, denen allerdings eine "6" vorangestellt ist.

In Übereinstimmung mit den zuvor beschriebenen Ausgestaltungen hat der Schaft 614, in dem z.B. nur ein exzentrisch liegender Kühl-/Schmiermittelkanal 668 ausgebildet ist, ein konisch zulaufendes Ende mit einer Konus-Passungsfläche 670, die die Mündungsöffnung 678 des Kühl-/Schmiermittelkanals 668 einfasst. Die Konus-Passungsfläche 670 ist allerdings durchgängig ausgebildet, d.h. durch keinen Schlitz unterbrochen.

Komplementär zum konischen Ende des Schaftes 614 ist im Anschlussstück 612 ein Innenkonus 672 ausgebildet, in den der zentrische Kühl-/Schmiermittelkanal 624 mündet. Damit bei zusammengefügten Teilen, d.h. bei flächiger Anlage der

Passungsfläche 670 am Innenkonus 672 eine Strömungsmittelverbindung zwischen dem zentrischen Innenkanal 624 und dem innenliegenden Kühl-/Schmiermittelkanal 668 hergestellt ist, hat das Anschlussstück 612 eine radial verlaufende schlitzartige Ausnehmung 674, deren radiale Erstreckung ER groß genug ist, dass sie die Mündungsöffnung 678 erfasst bzw. überdeckt. Die Formgebung des Schlitzgrundes kann dabei ebenso wie bei der Ausführungsform nach Figur 3 bis 5 gehalten sein.

Selbstverständlich sind Abweichungen von den vorstehend beschriebenen Varianten des Werkzeugs möglich, ohne den Grundgedanken der Erfindung zu verlassen.

So kann bei der Variante nach Figur 6 auch bzw. zusätzlich im Schaft eine schlitzartige Vertiefung ausgebildet sein.

Die Geometrie für die Ankopplung zwischen Werkzeug und MMS-Versorgungsteil kann einer Variation nach Größe und Konuswinkel unterworfen werden. Es kann selbstverständlich auch bei einer Konusflächenpaarung zusätzlich eine formschlüssige Verbindung, wie z. B. eine Flächenverzahnung Anwendung finden.

Der Kühlkanal im Schaft kann selbstverständlich auch zentral liegen. Auch kann der zentrale Kühlkanal im Anschlussstück entweder einen so großen Durchmesser haben, dass er den zumindest einen Kühl-/Schmiermittelkanal im Schaft überdeckt, oder es kann bereits im Anschlussstück eine Verzweigung der Strömung in Zweigkanäle stattfinden, die fluchtend in den Kühl-/Schmiermittelkanal im Schaft übergehen.

Die Ausnehmungen im Werkzeug müssen auch nicht zwingend bereits vor dem Sintervorgang eingebracht werden. Es ist gleichermaßen möglich, die Ausnehmungen entweder auf Endmaß oder grundsätzlich nach dem Sintervorgang in das Werkzeug bzw. den Schneidkopf einzubringen, was vorzugsweise erfolgt.

Auch ist das Anwendungsgebiet der Erfindung nicht auf drehangetriebene Werkzeuge wie z.B. Hochleistungs-Reibahlen beschränkt. Es können auch andere - angetriebene und nicht angetriebene Schaftwerkzeuge entsprechend ausgestattet werden, wie z. B. Gewindebohrwerkzeuge oder Fräswerkzeuge bzw. andere Reibahlen mit und ohne Drall, wobei diese Werkzeuge auch als stehende Werkzeuge beispielsweise in Bohrwerken oder Drehmaschinen eingesetzt werden können.

Als Kühl-/Schmiermittel können selbstverständlich alle üblichen Mittel eingesetzt werden. Eine Beschränkung auf MMS-Mittel ist nicht erforderlich. Vielmehr kann auch die sogenannte "Nass"-Schmierung Anwendung finden, d.h. Schmiermittel-Emulsionen bzw. Öle und deren Mischungen.

Die Ausnehmung im Schaft und/oder im Anschlussstück zur Herstellung der Strömungsmittelverbindung vom Anschlussstück zum Kühlkanal im Werkzeugschaft ist in den Ausführungsformen als Schlitz gezeigt. Die Form dieser Ausnehmung kann jedoch in weiten Grenzen variiert werden. Sie kann beispielsweise die Form einer kreisrunden Kalotte haben, d.h. einer konzentrisch in das Schaftende eingebrachten Vertiefung mit konkaver Innenoberfläche, wie zum Beispiel der Oberfläche einer Kugelschicht.

Die Erfindung schafft somit Schaftwerkzeug, das in besonderer Weise für die Ankopplung an eine Schnittstelle zu einer Einspeisestelle von Kühl-/Schmiermittel, insbesondere der Art, wie sie bei der Minimalmengenschmierung (MMS) verwendet wird, geeignet ist. Das Schaftwerkzeug ist mit zumindest einem in der Regel exzentrisch und innenliegenden Kühlkanal ausgestattet, der auf der einem Bearbeitungsabschnitt abgewandten Seite eine Mündungsöffnung hat. Diese ist von einer konischen Passungsfläche eingefasst, über die der Schaft - beispielsweise innerhalb eines Spannfutters - an ein koaxial liegendes MMS(Minimalmengenschmierung)-Versorgungsteil angeschlossen werden kann.

Erfindungsgemäß kommen einfache Passungsflächen, nämlich Konusflächen zum Einsatz, wobei die schwieriger herzustellende Innenkonusfläche am MMS-Zuführteil, d.h. in einem in der Regel einfacher zu bearbeitenden Teil ausgebildet wird.

## Patentansprüche

1. Schnittstelle zwischen:
einem Schaftwerkzeug (514) mit einem Bearbeitungsabschnitt und einem kreiszylindrischen Schaft, der einen in einem Spannfutter einzuspannenden zylindrischen Spannabschnitt und auf der dem Bearbeitungsabschnitt abgewandten Seite einen stirnseitigen Stützabschnitt in Form eines Außenkonus (570) aufweist, sowie zumindest einem zur Schaftachse versetzten innenliegenden Kühl-/Schmiermittelkanal (568), der am stirnseitigen Stützabschnitt eine Mündungsöffnung (578) hat, und
einem im Spannfutter anzuordnenden Anschlussstück (512), das einen zentrischen Kühl-/Schmiermittel-Versorgungskanal (524) hat, der auf der dem Schaftwerkzeug (514) zugewandten Seite im Scheitelbereich eines Innenkonus (572) austritt, welcher formschlüssig den ihm zugewandten stirnseitigen Stützabschnitt des Schaftwerkzeugs (514) aufnimmt, **dadurch gekennzeichnet, dass**
der stirnseitige Stützabschnitt des Schaftwerkzeugs (514) zumindest im Bereich radial außerhalb der Mündungsöffnung (578) die Form einer konischen Passungsfläche hat, die sich so weit radial nach innen erstreckt, dass sie von der Stirnseite des Schaftwerkzeugs (514) aus in Axialrichtung betrachtet die Mündungsöffnung (578) erfasst, und
die sich gegenüberliegenden Konusflächen des stirnseitigen Stützabschnitts des Schaftwerkzeugs (514) und des Anschlussstücks (512) so toleriert sind, dass bei axial fest aneinander liegenden Konusflächen eine Berührung im Bereich radial außerhalb der Mündungsöffnung (578) gewährleistet ist.

2. Schnittstelle nach Anspruch 1, **dadurch gekennzeichnet, dass** das Werkzeug in einem Spannfutter, insbesondere einem Hydro-Dehnspannfutter oder einem Schrumpffutter aufgenommen ist.

3. Schnittstelle nach Anspruch 1 oder 2, **dadurch gekennzeichnet, dass** das Anschlussstück von einem axial verstellbar im Spannfutter aufgenommenen Adapter (512) gebildet ist.

4. Schnittstelle nach einem der Ansprüche 1 bis 3, **dadurch gekennzeichnet, dass** eine die zumindest eine Mündungsöffnung (578; 678) im Werkzeugschaft (514; 614) erfassende schlitzartige Ausnehmung (574; 674) einen gerundeten Schlitzgrund (582) hat, wobei die schlitzartige Ausnehmung (574; 674) im Werkzeugschaft (514) und/oder im Anschlussstück (612) ausgebildet ist.

5. Schnittstelle nach Anspruch 4, **dadurch gekennzeichnet, dass** die jeweilige schlitzartige Ausnehmung (574) eine Breite (BS) hat, die im Wesentlichen der lichten Weite (LW) des vom Anschlussstück (512) kommenden Kühl-/Schmiermittel-Versorgungskanals () entspricht oder kleiner als diese ist.

6. Schnittstelle nach Anspruch 4 oder 5, **dadurch gekennzeichnet, dass** die schlitzartige Ausnehmung (574) im Wesentlichen Halbkreisquerschnitt hat.

7. Schnittstelle nach einem der Ansprüche 4 bis 6, **dadurch gekennzeichnet, dass** die Tiefe (TS) der schlitzartigen Ausnehmung in radialer Richtung zunimmt.

8. Schnittstelle nach einem der Ansprüche 1 bis 7, **dadurch gekennzeichnet, dass** der Adapter von einer Schraube gebildet ist, die im Wesentlichen die Form eines gestuften Zylinders hat, wobei der Abschnitt größeren Durchmessers den Innenkonus (572; 672) ausbildet.

9. Schnittstelle nach Anspruch 8, **dadurch gekennzeichnet, dass** der Adapter (512) auf der dem Werkzeug zugewandten Seite eine zentrische Mehrkantausnehmung (584) mit geringer axialer Erstreckung hat.

10. Schnittstelle nach einem der Ansprüche 1 bis 9, **dadurch gekennzeichnet, dass** das Werkzeug aus einem Hartstoff, insbesondere einem Sinterwerkstoff einschließlich einem Cermet-Werkstoff besteht.

11. Schnittstelle nach einem der Ansprüche 1 bis 10, **dadurch gekennzeichnet, dass** die zumindest eine Mündungsöffnung (578) im Bereich eines zugeordneten stirnseitigen, im Wesentlichen radial gerichteten Schlitzes (474; 574) liegt.

12. Schnittstelle nach einem der Ansprüche 1 bis 10, **dadurch gekennzeichnet, dass** der stirnseitige Stützabschnitt des Schaftwerkzeugs so ausgebildet ist, dass eine durchgängige Konus-Passungsfläche (670) vorliegt.
